# EUROPEAN PATENT SPECIFICATION

(11) **EP 0 867 669 B1**
(45) Date of publication and mention of the grant of the patent: **24.07.2002**
(21) Application number: 98105400.0
(22) Date of filing: 25.03.1998
(51) Int. Cl.: F25B 41/06, B21C 23/14, B21K 1/24

(54) **Expansion valve**
Entspannungsventil
Soupape de détente

(30) Priority: 27.03.1997 JP 7544497
(43) Date of publication of application: 30.09.1998
(73) Proprietor: Fujikoki Corporation, Tokyo (JP)
(72) Inventor: Watanabe, Kazuhiko, Setagaya-ku, Tokyo (JP); Yano, Masamichi, Setagaya-ku, Tokyo (JP)
(74) Representative: Modiano, Guido, Dr.-Ing.

(56) References cited:
- EP-A- 0 659 600
- EP-A- 0 762 063
- US-A- 2 669 011
- PATENT ABSTRACTS OF JAPAN vol. 097, no. 005, 30 May 1997 & JP 09 026235 A (FUJI KOKI:KK), 28 January 1997

## Description

### Technical Field of the Invention

The present invention relates to a thermal expansion valve for use in an air conditioning device of a vehicle and the like wherein the flow rate of the refrigerant supplied to the evaporator is controlled in correspondence with the temperature of the refrigerant passing the evaporator of a refrigeration cycle.

### Background of the invention

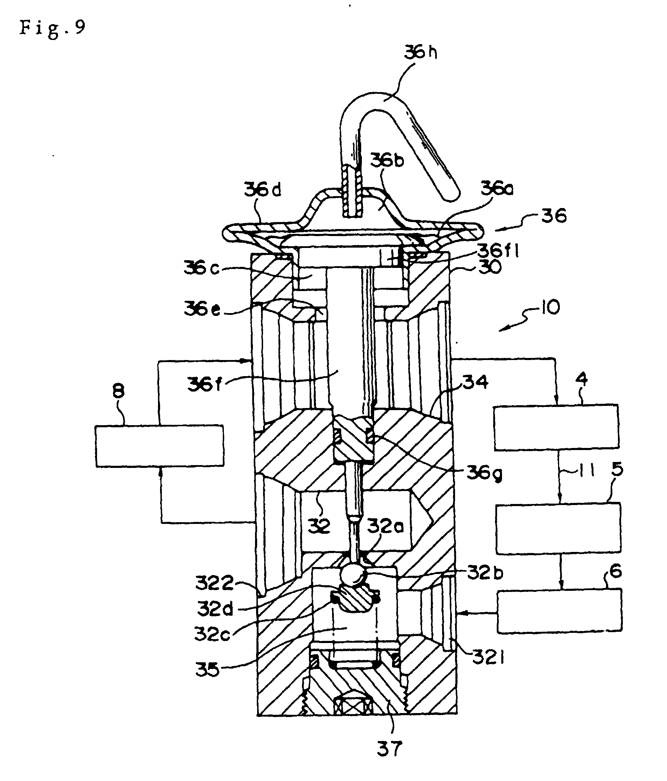

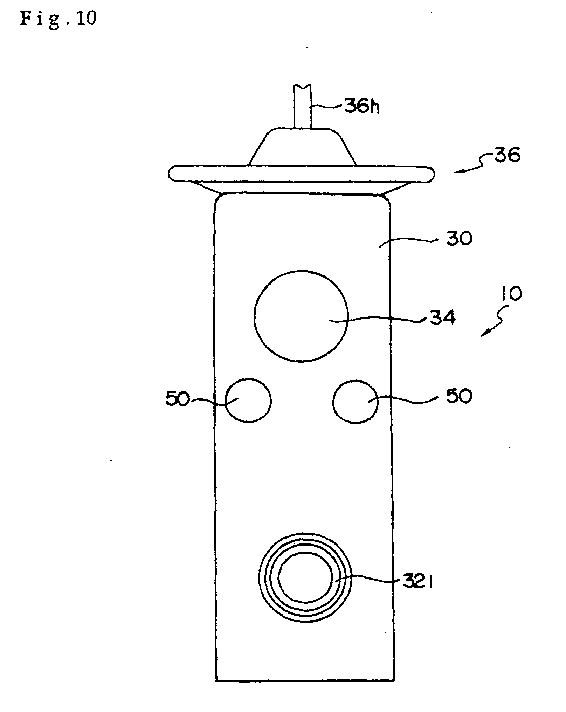

FIGS. 9 and 10 are a vertical cross-sectional view and a side view showing the concept of an expansion valve 10 of the prior art such as that shown in the document EP-A-0 762 063. In FIG. 9, the inner structure is omitted. A substantially rectangular solid-shaped valve body 30 of a thermal expansion valve comprises a refrigerant path 11 of a refrigeration cycle, and a first path 32 through the valve body 30 which extends from a refrigerant exit of a receiver 6 (which is preceded in the refrigerant path 11 by a condenser 5) to a refrigerant entrance of an evaporator 8, and a second path 34 through the valve body 30 which extends from a refrigerant exit of the evaporator 8 to a refrigerant entrance of a compressor 4 which is in the refrigerant path 11. The first path 32 and the second path 34 are formed so that one path is on top of the other path with a distance in between.

A valve hole 32a is formed in the first path 32 for the adiabatic expansion of a liquid refrigerant supplied from the refrigerant exit of the receiver 6. The valve hole 32a has a center line along a longitudinal direction of the valve body 30. A valve seat is formed in the entrance of the valve hole 32a. A valve member 32b is supported by a support member 32d in the valve seat, and is biased with the supporting member 32d by a biasing means 32c, for example a compression coil spring or the like.

The first path 32 comprises an entrance port 321 to which the liquid refrigerant from the receiver 6 is introduced and an exit port 322 for supplying the refrigerant to the evaporator 8. The valve body 30 includes the entrance port 321 and a valve chamber 35 connected to the entrance port 321. The valve chamber 35 is a chamber with a bottom formed on the same axis as a center line of the valve hole 32a, and is sealed by a plug 37.

On the upper end of the valve body 30, a valve member driving device 36, which comprises a heat sensing portion for driving the valve member 32b, is mounted by a screw. The valve member driving device 36 has a pressure activation housing 36d whose inner space is divided into an upper pressure activation chamber 36b and a lower pressure activation chamber 36c by a diaphragm 36a.

The lower pressure activation chamber 36c inside the pressure activation housing 36d is connected to the second path 34 through a pressure hole 36e formed in a concentric manner with the center line of the valve hole 32a.

A vaporized refrigerant passing through the evaporator 8 enters the second path 34 from the refrigerant exit. The path 34 is a path for gas-phase refrigerant, wherein the pressure of the vaporized refrigerant enters the lower pressure activation chamber 36c through the pressure hole 36e.

A valve member driving shaft 36f penetrating the second path 34, and extending from a lower surface of the diaphragm 36a to the valve hole 32a in the first path 32, is positioned in a concentric manner with the pressure hole 36e. The valve member driving shaft 36f comprises on its upper end a stopper portion 36fl which contacts the lower surface of the diaphragm, and is supported so as to be able to slide upward and downward along an inner surface of the lower pressure activation chamber 36c of the pressure activation housing 36d and along a wall which separates the first path 32 and the second path 34 in the valve body 30. The lower end of the valve member driving shaft 36f contacts the valve member 32b. In an outer peripheral area of the separation wall which serves as a guide hole for the valve member driving shaft 36f, a sealing member 36g is mounted to prevent leaking of refrigerant from the first path 32 to the second path 34.

The upper pressure activation chamber 36b of the pressure activation housing 36d is filled with a known heat sensing gas for driving diaphragms. The valve member driving shaft 36f is exposed in the pressure hole 36e and in the second path 34 to the temperature of the refrigerant passing through the second path 34 from the evaporator 8 to the compressor 4. The valve member driving shaft 36f acts as the heat sensing shaft and assumes the temperature of the refrigerant passing through the valve. This temperature assumed by the valve member driving shaft 36f is transmitted to the uppermost portion of the shaft 36f, including the stopper 36fl, and therefore to the pressure activation housing 36d. This temperature transmitted to the pressure activation housing 36d causes the gas in the upper pressure activation chamber 36b to expand or contract accordingly. A tube 36h is utilized for filling the upper pressure activation chamber 36b with heat sensing gas, and is closed after the filling.

A diaphragm driving fluid (heat sensing gas) inside the upper pressure activation chamber 36b turns into gas in correspondence with the heat transmitted thereto, and applies pressure to an upper surface of the diaphragm 36a. The diaphragm 36a deforms in the upward or downward direction according to a difference in pressure applied to a top surface of the diaphragm from the upper chamber 36b and pressure applied to the lower surface of the diaphragm 36a.

Displacement of the diaphragm 36a in the upward or downward direction is transmitted to the valve member 32b through the valve member driving shaft 36f, and moves the valve member 32b away from or toward the valve seat of the valve hole 32a, respectively. As a result, the flow of refrigerant passing through the valve hole 32a is controlled.

As is shown in FIG. 10, two bolt holes 50 are formed in the valve body 30. These bolt holes are used to mount the expansion valve and a corresponding member.

The valve body 30 having the above structure is manufactured by extruding aluminum alloy and adding mechanical processing, such as machining, thereto.

The first path 32 has a complex structure including two separate path sections, an orifice, and a valve chamber 35 within the valve body 30. The second path 34 has a simple structure including only a passage for the gas-phase refrigerant to pass from the evaporator 8 to the compressor 4. Therefore, the second path 34 can be processed as a straight penetrating hole.

Further, the two bolt holes 50 need only comprise a simple passage for the bolt to pass through.

A further example of valve body obtained by extrusion is available from the document JP-A-09026235.

The present invention provides an expansion valve whose valve body is manufactured in a simplified manner by using a hollow extrusion processing, as set forth in the claims 1, 5 and 8.

### Summary of the Invention

The expansion valve of the present invention transmits a temperature of a refrigerant passing from the evaporator to the compressor through a path formed by a hollow extrusion processing in a valve body having a substantially prismatic shape. The expansion valve of the present invention controls a flow of refrigerant supplied from a condenser to the evaporator through a path formed in the valve body, the flow of refrigerant is controlled according to a change in pressure of a heat sensing gas inside a pressure activation chamber.

The valve body has a substantially prismatic shape and has two bolt holes for mounting. A valve hole is formed in the first path. A valve member is seated in the valve hole and diaphragm is mounted in the valve body. A valve member driving shaft has one end fixed to the diaphragm and another end contacting the valve member. A flow of refrigerant passing through the valve hole in the first path is adjusted according to the temperature of the refrigerant flowing through the second path.

The second path of the valve body is formed by a hollow extrusion processing, so the second path can be processed at the same time as the valve body without the need for machining a hole. Thus, a processing step is omitted.

### Brief Description of the Drawing

FIG. 1 is a vertical cross-sectional view showing one embodiment of an expansion valve of the present invention;
FIG. 2 is an explanatory view showing a concept of a manufacturing device of the expansion valve body according to the present invention;
FIG. 3 is a cross-sectional view taken along line A-A of FIG. 2;
FIG. 4 is an explanatory view showing hollow extrusion processing;
FIG. 5 is a schematic view of the material formed by hollow extrusion processing;
FIG. 6 is a side view showing another embodiment of the expansion valve according to the present invention;
FIG. 7 is a side view showing yet another embodiment of the expansion valve according to the present invention;
FIG. 8 is a vertical cross-sectional view showing yet another embodiment of the expansion valve according to the present invention;
FIG. 9 is a vertical cross-sectional view explaining an expansion valve of the prior art; and
FIG. 10 is a side view of the prior art expansion valve shown in FIG. 9.

### Detailed Description of the Preferred Embodiments

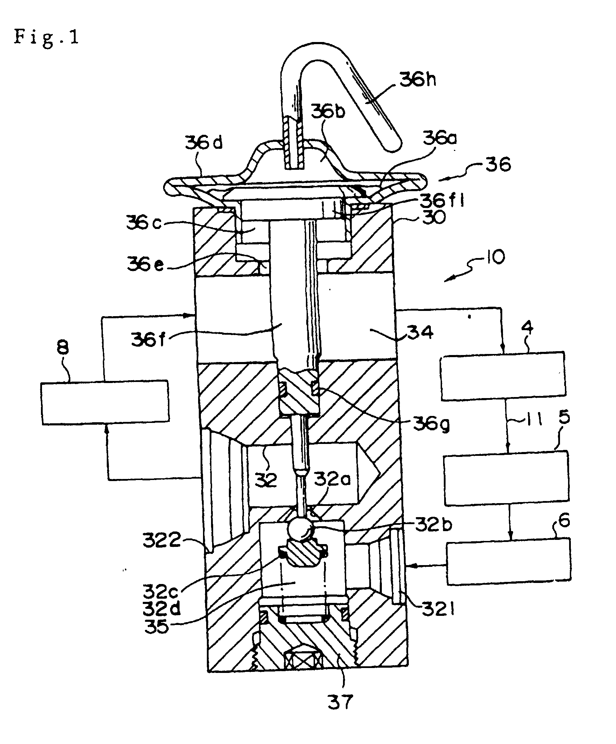

FIG. 1 is a vertical cross-sectional view showing one embodiment of an expansion valve of the present invention. The structure and operation of the present expansion valve is the same as that shown in FIG. 9. However, FIG. 1 is characterized by the fact that the second path 341 is formed by a hollow extrusion processing, which differs from the machined second path 34 of FIG. 9. Therefore, in the expansion valve shown in FIG. 1, the second path and the two bolt holes in the valve body were formed by a hollow extrusion processing, and the areas near the entrance and exit of the second path are provided with additional mechanical processing, such as machining, after hollow extrusion processing.

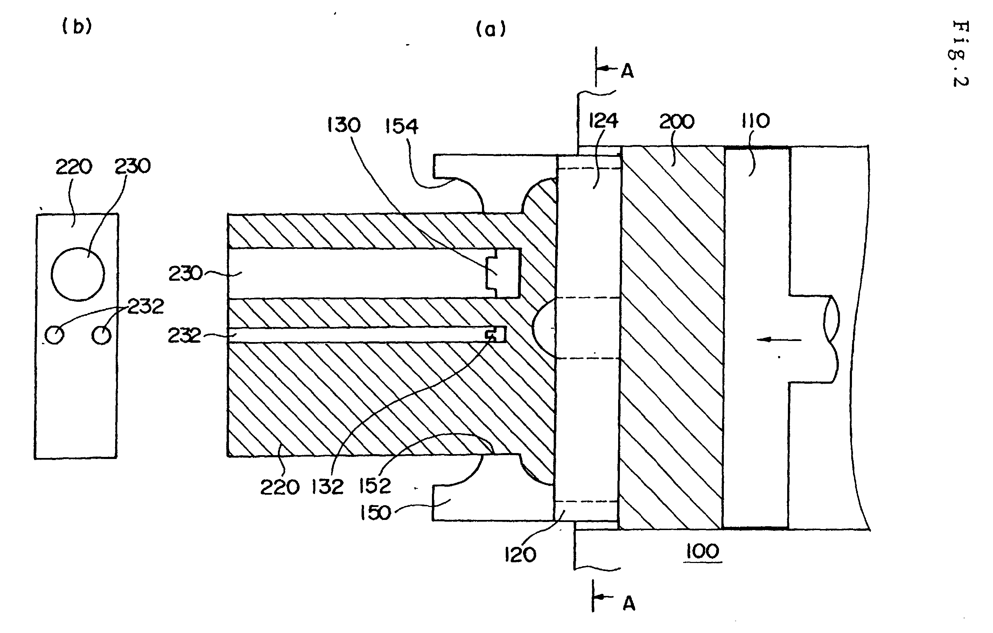

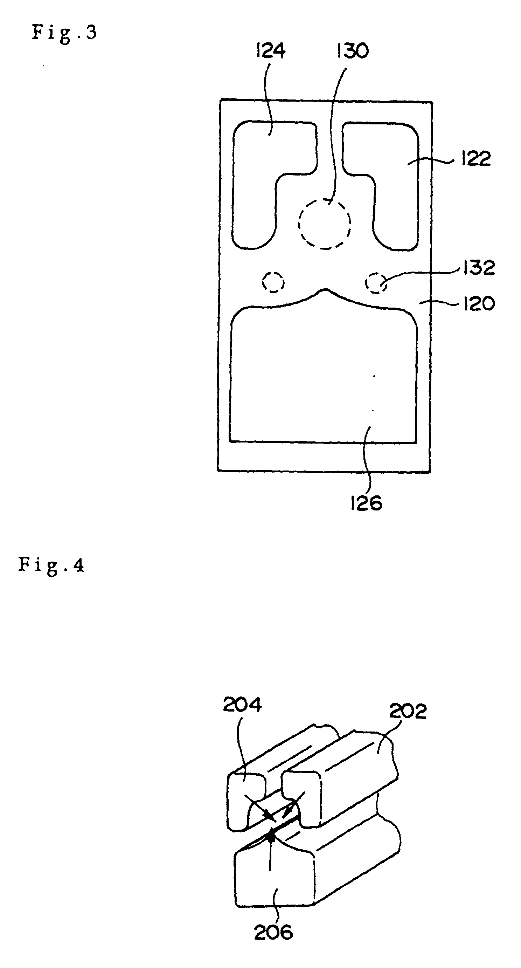

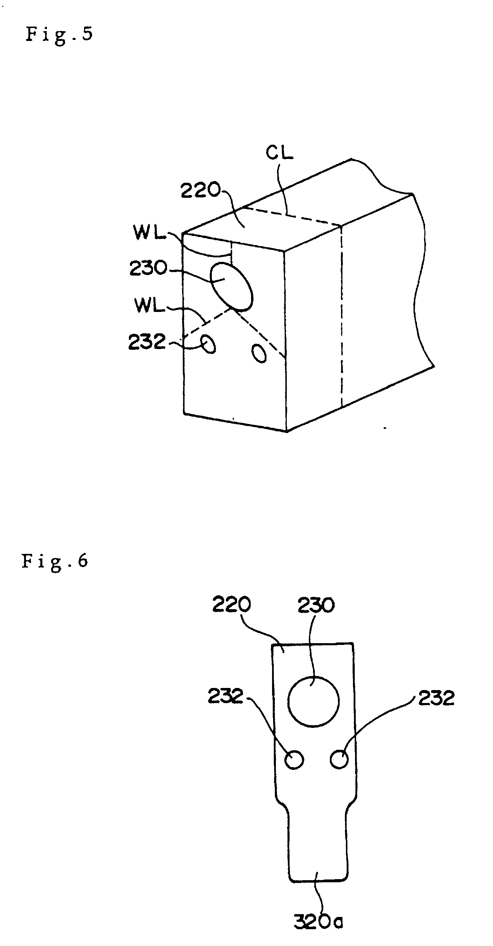

FIG. 2 shows an explanatory concept view of a manufacturing device for a valve body of the present invention. FIG. 3 is a cross-sectional view taken along line A-A of FIG. 2. FIG. 4 is an explanatory view of hollow extrusion processing. FIG. 5 is a schematic view of the molded valve body material.

Referring to FIGS. 2 to 4 a hollow extrusion device 100 comprises a piston 110 for pushing a billet 200 made of aluminum alloy.

The first molding die 120 comprises cavities 122, 124 and 126 for extruding the pushed billet 200 into member 202, 204 and 206, respectively. In the shown device, three cavities 122, 124 and 126 are included, but any design and number of openings could be used according to a desired shape of the molded element.

At an exit side of the first molding die 120, mandrels 130 and 132 are provided and form a penetrating hole in the valve body as the molded member exits the first molding die 120.

The mandrel 130 forms a path in the valve body 30. The two mandrels 132 form two bolt holes.

Second molding dies 150 and 154, positioned at the exit side of the first molding die 120 form an outside shape of the product.

FIGS. 4 is an explanatory view showing the status of the member extruded from a cavity of the first die 120. Three members 202, 204 and 206 are extruded to a shape corresponding to the shape of the cavity. FIG.5 is an explanatory view showing the status of the member extruded from the second die 150 after penetration by mandrels 130 and 132. The mandrels penetrate holes in the outer shape of members 202, 204 and 206 when the members 202, 204 and 206 are squeezed through an opening 152 of the second die 150 in an inward direction (see arrows in FIG. 4). A member 220 exits the second die 150 as a single unit with the three members 202, 204 and 206 contacting each other along welding lines WL.

The valve body material 220 extruded from the second die 150 comprises a large penetrating hole 230 which is a second path, and smaller penetrating holes 232 which are two bolt holes.

A material of a single valve body is sectioned off by cutting the long member 220 emerging from die 150 at a cutting line CL.

As explained above, during hollow extrusion processing an outside shape of the manufactured product can be changed as desired by changing a shape of the second die 150. Therefore, as is shown in the embodiment of FIG. 6, a smaller product could be obtained by forming the material 220 of the valve body of the expansion valve to have a decreased width at a lower portion 320a. In such material 220, the size of the large penetrating hole 230 (the second path) and the small bolt holes 232 and their position are the same as that of the embodiment of FIG. 1.

In the above embodiment, the second path and the two bolt holes are formed by hollow extrusion processing. However, the present invention is not limited to such embodiment.

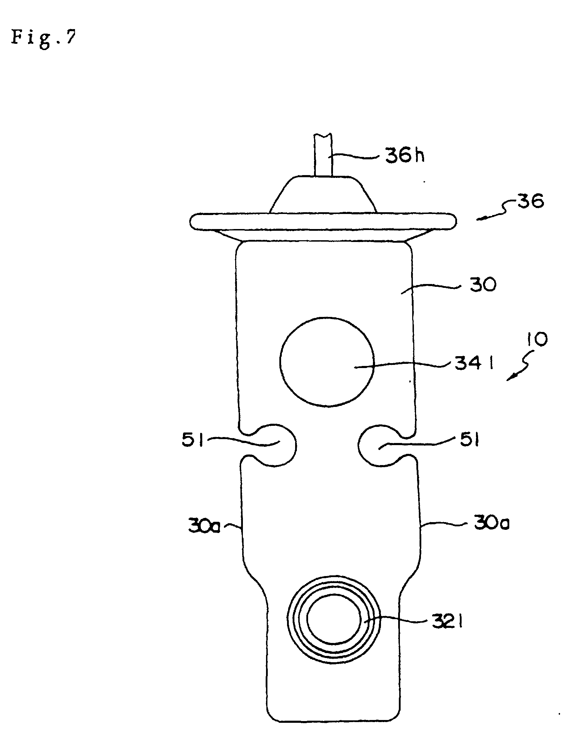

Further, in the present invention, when forming bolt holes by hollow extrusion processing, the holes can be formed either as penetrating holes as in the previous embodiment, or as grooves formed on both sides of the valve body (see FIG. 7). FIG. 7 is a side view showing another embodiment of the present invention. The bolt holes 51 are formed as grooves positioned on both sides of the valve body 30. In FIG. 7, the valve body 30 is shown to have a narrow width size at a lower portion as was shown in FIG. 6. Its structure and operation are the same as the expansion valve shown in FIG. 1, but FIG. 7 is characterized in that grooves 51 are formed on both sides 30a of the valve body 30 as bolt holes by the hollow extrusion processing. Further, the grooves 51 can be formed at the same time as the second path 341 or either of them could be formed alone.

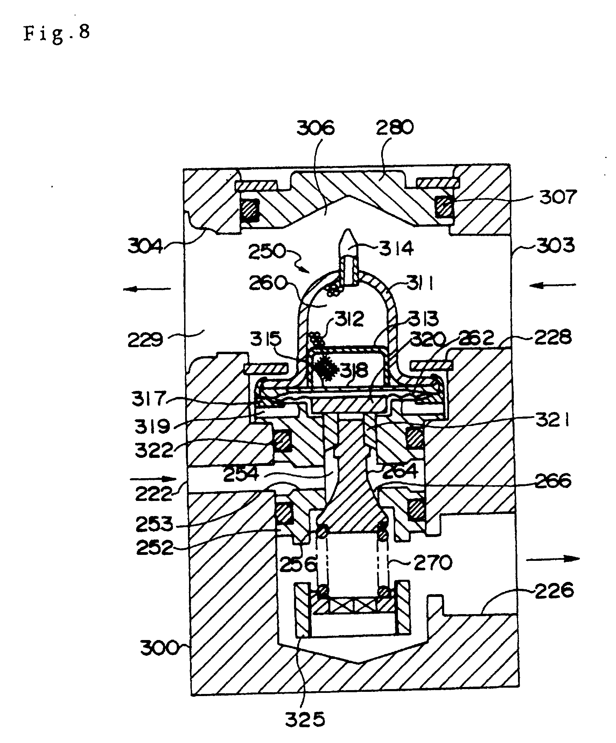

FIG. 8 is a vertical cross-sectional view showing yet another embodiment of the expansion valve of the present invention. The basic structure of this box-type expansion valve is laid-open in Japanese Patent Publication No. H5-71860. In the drawing, a block case 300 constitutes the valve body and comprises an entrance 222 of a path through which liquid-phase refrigerant flows from the condenser (not shown), an exit 226 for supplying refrigerant to an evaporator (not shown), an entrance 303 of a path 228 through which gas-phase refrigerant flows, and an exit 304 of the path 228 through gas-phase refrigerant returns to the compressor (not shown). The arrows in the drawing show the direction of flow of refrigerant.

In the embodiment of FIG. 8, the block case 300 includes a path 229, connecting the entrance 303 and the exit 304, which is formed by hollow extrusion processing. Mechanical processing, such as machining, is added to an end surface of the exit 304 after the path 229 is formed.

The block case 300 comprises, for example, an aluminum alloy. A plug 280 acts as a lid for sealing a hole in the block case 300. A concavity 306 is shaped and sized to permit mounting of a valve unit 250 for operating an expansion valve inside the block case 300. Sealing of the plug 280 is provided by an o-ring 307. The valve unit 250 comprises a power element portion 260, a valve member 264 with a tapered portion 266, and a bias spring 270. The power element portion 260 is placed inside the path 229, and activated carbon 312 is sealed inside a heat sensing portion formed by a power element case 311 and a bottom plate 315. A refrigerant which is either the same as or shows the same characteristics as the refrigerant in the refrigeration cycle is introduced via a pipe 314 into the heat sensing portion as a heat sensing gas. Pipe 314 is subsequently sealed. Since the activated carbon is placed inside the flow path of the refrigerant, a wire net 313 is placed so that a gas introduction opening 318, positioned in the center portion of the bottom plate 315, will not be covered by the activated carbon. The amount of activated carbon is adjusted. Further, in the area between the bottom plate 315 and a diaphragm receiver 317, a diaphragm 262 is positioned. A periphery of the diaphragm 262 and a periphery of the power element case 311 are held in place by the diaphragm receiver 317, and are sealed by soldering.

The diaphragm 262 comprises, for example, stainless steel material.

A corrugate is formed in the peripheral area of the diaphragm 262 so that a certain flexure can be obtained in response to a change of pressure inside the power element portion 260. An amount flexure δ of the diaphragm is determined by a pressure difference Δ P between a pressure P_{B} inside the power element portion 260 which is applied to an upper surface of the diaphragm 262, and a pressure P_{L} of refrigerant flowing from the entrance 303 toward the exit 304 of path 229 which is applied to a lower surface of the diaphragm 262 through a pressure hole 319. A force F₁ which pushes the valve member 264 in a downward direction is decided by δ and thus by Δ P.

The bottom plate 315 is provided to limit deformation of the diaphragm 262 in an upward direction. A stopper 320 is provided to limit deformation of the diaphragm 262 in downward direction. The force F₁ is transmitted from the diaphragm 262 to the valve member 264 through the stopper 320 and a collar 321.

A bellows seal 322 is provided to keep high-pressure liquid-phase refrigerant from flowing from the liquid-phase refrigerant entrance 222 into the pressure hole 319 and the path 229. The collar 321, the bellows seal 322 and the valve member 264 are formed as an unit which is slidably positioned in a center hollow portion of a body 252. A high-pressure liquid pathway is provided between the liquid-phase refrigerant entrance 222 and the center hollow portion of the body 252. Further, a lower portion of the body 252 is equipped with a lower hollow portion 256 having a larger diameter than the center hollow portion. A lower portion of the center hollow portion constitutes a valve port 254. A bias coil spring 270 is placed inside the lower hollow portion 256, and a bias spring force is adjusted by an adjustment screw 325.

The activated carbon 312 in the power element portion 260 senses a temperature of the refrigerant flowing from the refrigerant gas entrance 303 through the power element case 311 to the refrigerant gas exit 304. This temperature corresponds to a superheated vapor temperature of the refrigerant, and the pressure corresponding to the temperature becomes the pressure P_{B} inside the power element by adsorption equilibrium. On the other hand, P_{B} - P_{L} = Δ P, and the force F₁ related to the flexure δ of the diaphragm 262 becomes the force for pushing the valve member 264. Thus, the degree of opening of the valve is determined by the bias of coil spring 270 and a fluid force decided by a shape of the valve. The degree of opening of the valve controls a flow rate of refrigerant flowing from the liquid-phase refrigerant entrance 222 to the refrigerant exit 226.

The present invention forms the valve body of the aforementioned expansion valve having a substantially prismatic shape using extrusion processing. The valve body of the expansion valve comprises a straight hole for the refrigerant passing from the evaporator toward the compressor, and two bolt holes formed parallel to the straight hole. Therefore, by hollow extrusion processing, these holes are formed in a unit, omitting the mechanical processing step which was necessary in the prior art after molding. Using hollow extrusion processing, the amount of aluminum material need to create a valve body could be lessened, and a cost-effective expansion valve could be gained.

Where technical features mentioned in any claim are followed by reference signs, those reference signs have been included for the sole purpose of increasing the intelligibility of the claims and, accordingly, such reference signs do not have any limiting effect on the interpretation of each element identified by way of example by such reference signs.

## Claims

1. An expansion valve comprising:
- a substantially prismatic-shaped valve body (30);
- a first fluid path (32) formed in the valve body for refrigerant flowing to an evaporator (8);
- a second fluid path (34) for refrigerant flowing from the evaporator (8) to a compressor (4);
- a valve member (32b) controlling fluid flow, through said first fluid path (32);
- a heat sensing portion (36d, 36b) sensing the temperature of the refrigerant flowing through said second fluid path (34) and actuating fluid flow control through said first fluid path (32); and
- a heat sensing shaft (36f) transmitting the temperature of said refrigerant fluid to said heat sensing portion (36d, 36b),
**characterized in that**,
said second fluid path is constituted by a hole (34) formed through the valve body (30) by hollow extrusion of a billet (200) while said billet *is* extruded to obtain the shape of the valve body (30).

2. The expansion valve of claim 1, **characterized in that** said first fluid path (32) is provided as a through hole in said valve body (30).

3. The expansion valve of any of the claims 1 or 2, **characterized in that** said valve means comprise a valve member (32b) connected to said heat sensing shaft (36f) which acts as a valve member actuation shaft adapted to actuate said valve member (32b) to controllably move toward and away from the valve seat of a valve hole (32a) located at said first fluid path (32) so as to control refrigerant flow therethrough.

4. The expansion valve according to any of the claims 1-3, **characterized in that** said second fluid path (34) extends as a straight hole all through said valve body (30).

5. A valve body for an expansion valve as set forth in claim 1, being substantially prismatic and comprising a first fluid path (32) and a second fluid path (34) and two bolt holes (50), **characterized in that** the body is formed from a billet (200) by a hollow extrusion thereof which defines the shape of the body member (220) and at least said second fluid path (34) as a through hole (230) in said body.

6. A valve body as set forth in claim 5, **characterized in that** it is made in aluminum or in an aluminum alloy.

7. A valve body as set forth in any of the claims 5-6, **characterized in that** it further comprises two bolt holes (232) extending through said body substantially parallel to the through hole (230) forming said second fluid path (34), said bolt holes (232) being formed by hollow extrusion of the body (30).

8. A method for extruding a valve body including at least a first (32) and a second (34) fluid paths, comprising the steps of:
- providing a hollow extrusion device (100);
- providing a billet (200);
- pushing said billet (200) through said device (100) so as to obtain a plurality of members (202, 204, 206), said members (202, 204, 206) being extruded so as to form together a cavity shape corresponding substantially to the second fluid path (34) of the valve body; and
- squeezing said members (202, 204, 206) through a die (150) of said extrusion device (100) so as to join together the members as a single unit member (220) having at least one through hole (230) to define said second fluid path (34).

9. The method of claim 8, comprising providing the extrusion device (100) so as to have a first die (120), second dies (150, 154) and three mandrels (130,132), wherein the first die (120) is provided with three cavities (122, 124, 126) which form in said pushing step said three members (202, 204, 206), and wherein said mandrels (130, 132) form, in said squeezing step, the through hole (230) suitable to provide said second fluid path (34) and two smaller holes (232) suitable to form two bolt holes.

10. The method of any of the claims 8 or 9, wherein said squeezing step comprises pressure welding of said three members (202, 204, 206) along welding lines (WL) so as to form said single unit member (220).

11. The method of any of the claims 8 -10, further comprising cutting the single unit member (220) along a cutting line (CL) so as to obtain a single valve body (30).

## Patentansprüche

1. Ein Entspannungsventil, das folgendes umfasst:
einen im wesentlichen prismatisch geformten Ventilkörper (30);
einen ersten Fluidweg (32), der im Ventilkörper ausgebildet ist, damit ein Kühlmittel zu einem Verdampfer (8) fließt;
einen zweiten Fluidweg (34), damit ein Kühlmittel vom Verdampfer (8) zu einem Verdichter (4) fließt;
ein Ventilglied (32b), das die Fluidströmung durch den ersten Fluidweg (32) regelt;
einen Wärmeabtastabschnitt (36d, 36b), der die Temperatur des Kühlmittels abtastet, das durch den zweiten Fluidweg (34) fließt, und der die Fluidströmungssteuerung durch den ersten Fluidweg (32) betätigt; und
eine Wärmeabtastwelle (36f), die die Temperatur des Kühlmittelfluids an den Wärmeabtastabschnitt (36d, 36b) überträgt,
**dadurch gekennzeichnet, dass**
der zweite Fluidweg durch ein Loch (34) gebildet ist, das durch Hohlstrangpressen eines Blocks (200) durch den Ventilkörper (30) gebildet wird, während der Block fließgepresst wird, um die Form des Ventilkörpers (30) zu erhalten.

2. Das Entspannungsventil nach Anspruch 1, **dadurch gekennzeichnet, dass** der erste Fluidweg (32) als ein durchgehendes Loch im Ventilkörper (30) bereitgestellt wird.

3. Das Entspannungsventil nach irgendeinem der Ansprüche 1 oder 2, **dadurch gekennzeichnet, dass** das Ventilmittel ein Ventilglied (32b) umfasst, das mit der Wärmeabtastwelle (36f) verbunden ist, die als eine Ventilglied-Betätigungswelle wirkt, die ausgebildet ist, um das Ventilglied (32b) so zu betätigen, dass es sich steuerbar in Richtung Ventilsitz eines Ventillochs (32a), das sich am ersten Fluidweg (32) befindet, und davon weg bewegt, damit der Kühlmittelstrom dadurch gesteuert wird.

4. Das Entspannungsventil nach irgendeinem der Ansprüche 1-3, **dadurch gekennzeichnet, dass** sich der zweite Fluidweg (34) als ein gerades Loch ganz durch den Ventilkörper (30) erstreckt.

5. Ein Ventilkörper für ein Entspannungsventil gemäß Anspruch 1, der im wesentlichen prismatisch ist und einen ersten Fluidweg (32) und einen zweiten Fluidweg (34) und zwei Bolzenlöcher (50) umfasst, **dadurch gekennzeichnet, dass** der Körper durch Hohlstrangpressen davon aus einem Block (200) gebildet ist, was die Form des Körperglieds (220) und mindestens den zweiten Fluidweg (34) als ein durchgehendes Loch (230) im Körper bestimmt.

6. Ein Ventilkörper gemäß Anspruch 5, **dadurch gekennzeichnet, dass** er aus Aluminium oder aus einer Aluminiumlegierung hergestellt wird.

7. Ein Ventilglied, gemäß irgendeinem der Ansprüche 5-6, **dadurch gekennzeichnet, dass** er weiterhin zwei Bolzenlöcher (232) umfasst, die sich im wesentlichen parallel zum durchgehenden Loch (230), das den zweiten Fluidweg (34) bildet, durch den Körper erstrecken, wobei die Bolzenlöcher (232) durch das Hohlstrangpressen des Körpers (30) gebildet werden.

8. Ein Verfahren zum Fließpressen eines Ventilkörpers, der mindestens einen ersten (32) und einen zweiten (34) Fluidweg einschließt, wobei es folgende Schritte umfasst:
das Bereitstellen einer Hohlstrangpressvorrichtung (100);
das Bereitstellen eines Blocks (200);
das Drücken des Blocks (200) durch die Vorrichtung (100), um eine Mehrzahl an Gliedern (202, 204, 206) zu erhalten, wobei die Glieder (202, 204, 206) fließgepreßt werden, um zusammen eine Hohlraumform zu bilden, die im wesentlichen dem zweiten Fluidweg (34) des Ventilkörpers entspricht; und
das Quetschen der Glieder (202, 204, 206) durch eine Gussform (150) der Fließpressvorrichtung (100), damit die Glieder als ein einziges integrales Glied (220) miteinander verbunden werden, das mindestens ein durchgehendes Loch (230) hat, um den zweiten Fluidweg (34) zu bestimmen.

9. Das Verfahren nach Anspruch 8, das die Bereitstellung der Fließpressvorrichtung (100) umfasst, um über eine erste Gussform (120), zweite Gussformen (150, 154) und drei Spindeln (130, 132) zu verfügen, worin die erste Gussform (120) mit drei Hohlräumen (122, 124, 126) versehen ist, die im Druckschritt die drei Glieder (202, 204, 206) bilden, und worin die Spindeln (130, 132) im Quetschschritt das durchgehende Loch (230) bilden, das geeignet ist, um den zweiten Fluidweg (34) bereitzustellen, und zwei kleinere Löcher (232) bilden, die geeignet sind, um zwei Bolzenlöcher zu bilden.

10. Das Verfahren nach irgendeinem der Ansprüche 8 oder 9, worin der Quetschschritt das Druckschweißen der drei Glieder (202, 204, 206) an Schweißlinien (WL) entlang umfasst, um das einzige integrale Glied (220) zu bilden.

11. Das Verfahren nach irgendeinem der Ansprüche 8-10, das weiterhin das Schneiden des einzigen integralen Glieds (220) entlang einer Schneidelinie (CL) umfasst, um einen einzelnen Ventilkörper (30) zu erhalten.

## Revendications

1. Vanne de détente comprenant:
- un corps de vanne (30) sensiblement en forme de prisme;
- un premier trajet de fluide (32) formé dans le corps de vanne pour l'écoulement de réfrigérant vers un évaporateur (8);
- un second trajet de fluide (34) pour l'écoulement de réfrigérant de l'évaporateur (8) vers un compresseur (4);
- un élément de vanne (32b) commandant l'écoulement de fluide à travers ledit premier trajet de fluide (32);
- une partie de détection de chaleur (36d, 36b) détectant la température du réfrigérant s'écoulant à travers ledit second trajet de fluide (34) et actionnant la commande de l'écoulement de fluide à travers ledit premier trajet de fluide (32); et
- un arbre de détection de chaleur (36f) transmettant la température dudit fluide réfrigérant à ladite partie de détection de chaleur (36d, 36b),
**caractérisée en ce que**
ledit second trajet de fluide est constitué par un trou (34) formé à travers le corps de vanne (30) par extrusion en creux d'un lingot (200) tandis que ledit lingot est extrudé pour obtenir la forme du corps de vanne (30).

2. Vanne de détente selon la revendication 1, **caractérisée en ce que** ledit premier trajet de fluide (32) est prévu en tant que trou traversant dans ledit corps de vanne (30).

3. Vanne de détente selon l'une des revendications 1 ou 2, **caractérisée en ce que** ledit moyen de vanne comprend un élément de vanne (32b) raccordé audit arbre de détection de chaleur (36f) qui agit comme arbre d'actionnement d'élément de vanne propre à actionner ledit élément de vanne (32b) pour un déplacement commandé vers et à l'opposé du siège de vanne d'un trou de vanne (32a) placé dans ledit premier trajet de fluide (32) de façon à commander l'écoulement de réfrigérant à travers celui-ci.

4. Vanne de détente selon l'une quelconques des revendications 1 à 3, **caractérisée en ce que** ledit second trajet de fluide (34) s'étend comme un trou rectiligne à travers la totalité dudit corps de vanne (30).

5. Corps de vanne pour une vanne de détente selon la revendication 1, étant sensiblement prismatique et comprenant un premier trajet de fluide (32) et un second trajet de fluide (34) et deux trous pour boulon (50), **caractérisé en ce que** le corps est formé à partir d'un lingot (200) par extrusion en creux de celui-ci qui définit la forme de l'élément de corps (220) et au moins ledit second trajet de fluide (34) comme trou traversant (230) dans ledit corps.

6. Corps de vanne selon la revendication 5, **caractérisé en ce qu'**il est fabriqué en aluminium ou en alliage d'aluminium.

7. Corps de vanne selon l'une des revendications 5 et 6, **caractérisé en ce qu'**il comprend, en outre, deux trous pour boulon (232) s'étendant à travers ledit corps sensiblement parallèlement au trou traversant (230) formant ledit second trajet de fluide (34), lesdits trous pour boulon (232) étant formés par extrusion en creux du corps (30).

8. Procédé pour extruder un corps de vanne incluant au moins des premier (32) et second (34) trajets de fluide comprenant les étapes consistant à:
- fournir un dispositif d'extrusion en creux (100);
- fournir un lingot (200);
- pousser ledit lingot (200) à travers ledit dispositif (100) de façon à obtenir une pluralité d'éléments (202, 204, 206), lesdits éléments (202, 204, 206) étant extrudés de façon à former ensemble une forme de cavité correspondant sensiblement au second trajet de fluide (34) du corps de vanne; et
- serrer lesdits éléments (202, 204, 206) à travers une filière (150) dudit dispositif d'extrusion (100) de façon à raccorder ensemble les éléments comme un seul élément unitaire (220) ayant au moins un trou traversant (230) pour définir ledit second trajet de fluide (34).

9. Procédé selon la revendication 8, comprenant la fourniture du dispositif d'extrusion (100) de façon à avoir une première filière (120), des secondes filières (150, 154) et trois mandrins (130, 132) dans lequel la première filière (120) est munie de trois cavités (122, 124, 126) qui forment dans ladite étape de poussée lesdits trois éléments (202, 204, 206) et dans lequel lesdits mandrins (130, 132) forment, dans ladite étape de serrage, le trou traversant (230) approprié pour procurer ledit second trajet de fluide (34) et deux trous plus petits (232) appropriés pour former les deux trous pour boulon.

10. Procédé selon l'une quelconque des revendications 8 ou 9, dans lequel ladite étape de serrage comprend le soudage sous pression desdits trois éléments (202, 204, 206) le long de lignes de soudage (WL) de façon à former ledit seul élément unitaire (220).

11. Procédé selon l'une quelconque des revendications 8 à 10, comprenant, en outre, la découpe du seul élément unitaire (220) le long d'une ligne de découpe (CL) de façon à obtenir un seul corps de vanne 30.
